# EUROPÄISCHE PATENTSCHRIFT

(11) **EP 2 047 124 B1**
(45) Veröffentlichungstag und Bekanntmachung des Hinweises auf die Patenterteilung: **25.05.2011**
(21) Anmeldenummer: 07786442.9
(22) Anmeldetag: 31.07.2007
(51) Int. Cl.: F16B 13/14

(54) **VERWENDUNG VON KUNSTHARZEN BEIM BEFESTIGEN VON SCHRAUBEN UND ÄHNLICHEN VERANKERUNGSMITTELN, UND ENTSPRECHENDES VERFAHREN**
USE OF SYNTHETIC RESINS DURING THE FASTENING OF SCREWS AND SIMILAR ANCHORING MEANS, AND CORRESPONDING METHOD
UTILISATION DE RESINES SYNTHETIQUES LORS DU SERRAGE DE VIS ET AUTRES DISPOSITIFS D'ANCRAGE ANALOGUES, ET PROCEDE ASSOCIE

(30) Priorität: 04.08.2006 DE 102006036438
(43) Veröffentlichungstag der Anmeldung: 15.04.2009
(73) Patentinhaber: Fischerwerke GmbH & Co. Kg, 72178 Waldachtal (DE)
(72) Erfinder: GRÜN, Jürgen, 79268 Bötzingen (DE); VOGEL, Martin, 79286 Glottertal (DE); SCHLENK, Christian, 79211 Denzlingen (DE)
(86) Internationale Anmeldenummer: PCT/EP2007/006744
(87) Internationale Veröffentlichungsnummer: WO 2008/014966

(56) Entgegenhaltungen:
- EP-A1- 0 004 002
- EP-A1- 0 004 002
- GB-A- 2 207 726
- JP-A- 2004 339 446
- US-A- 2 110 053
- US-B1- 6 296 429
- US-B1- 6 296 429

## Beschreibung

Die Erfindung betrifft die Verwendung (mindestens) eines flüssigen bis pastösen, im Rahmen der Verwendung aushärtenden Mehrkomponenten-Kunstharzsystems zur Fixierung von Befestigungselementen in einem Substrat, und/oder Verfahren zur Fixierung von Befestigungselementen, welche die genannte Verwendung umfassen.

Es sind eine Reihe von Ein- oder Mehrkomponentensystemen bekannt, welche härtbare Kunstharze oder Kunstharzmassen beinhalten, die in Löcher, beispielsweise Bohrlöcher, eingebracht werden und in die während des Aushärtens Befestigungselemente, z.B. Verankerungselemente, wie Bolzen, eingebracht werden, solange die härtbaren Kunstharzmischungen noch plastisch-flüssig sind, so dass die Verankerungselemente nach dem Aushärten im jeweiligen Loch befestigt sind. Ebenfalls bekannt sind Schaumstoffsysteme, die z.B. zum Ausfüllen von Hohlräumen oder zum Herstellen von Formkörpern geeignet sind.

Insbesondere bei großen und/oder unregelmäßigen Bohrlöchern ist eine Schwierigkeit, dass die verwendeten Harze während des Härtungsvorgangs aus den Löchern auslaufen können. Auch kann es bei ungleichmäßig geformten Löchern schwierig sein, die Wandungen des Lochs hinreichend gleichmäßig mit der verwendeten Masse zu benetzen und/oder die Löcher aufzufüllen. Schließlich kann es bei größeren Löchern, die deutlich größere Durchmesser haben als die einzubringenden Befestigungselemente, zu Schwierigkeiten kommen, ein Befestigungselement an der richtigen Stelle zu platzieren, beispielsweise zu zentrieren, da die Harze vor dem Aushärten noch eine Bewegung (beispielsweise ein Absinken in Richtung der Schwerkraft) des Befestigungselements erlauben.

Die Verwendung von Fertigdübeln, wie insbesondere Spreizdübeln oder Universaldübeln, erfordert andererseits gut an die Dübelform angepasste Bohrlöcher, da sonst der nötige Halt nicht zustande kommt, oder kompliziertere Dübelkonstruktionen. Weiterhin ist es bei der Verwendung von Fertigdübeln erforderlich, dass die Außendurchmesser der Schrauben und die Innendurchmesser der Dübel eng aufeinander abgestimmt sind, so dass es an Flexibilität mangelt, wenn beispielsweise zueinander passende Dübel und Schrauben nicht verfügbar sind.

Bekannt sind beispielsweise auch Thermoplaste, die etwa mittels Heißkleberpistolen in Löcher eingebracht werden können und in die anschließend Schrauben eingedreht werden können (vgl. das Gebrauchsmuster DE 296 17 234). Hier ist jedoch ein relativ hoher apparativer Aufwand erforderlich, und es sind hohe Temperaturen notwendig, um die Befestigungsmasse einzubringen, ja sogar ein Vorwärmen von beispielsweise einzubringenden Schrauben ist erforderlich. Bei hohen Umgebungstemperaturen (z.B. in heißen Ländern oder bei intensiver Sonneneinstrahlung) können Heißkleber ungeeignet sein, da sie schmelzen.

Weiterhin ist aus der Druckschrift GB 2207726 A ein Verfahren bekannt, bei dem ein Dübel aus einer Zwei-Komponenten-Masse erzeugt wird, welche in das Bohrloch injiziert wird. Noch solange die Masse nicht ausgehärtet und noch plastisch verformbar ist, wird eine Schraube eingetrieben. Allerdings können mit einem derartig erzeugten Dübel nur geringe Haltewerte erzielt werden.

Es besteht vor diesem Hintergrund die Aufgabe, weitere Systeme zur Befestigung von Befestigungselementen in Löchern zu finden, die es ermöglichen, Löcher beliebiger Form rasch für das Einbringen von Befestigungselementen vorzubereiten und auf einfache Weise die Fixierung solcher Befestigungselemente zu ermöglichen, insbesondere unter möglichst gleichmäßiger Benetzung der Wandungen und Ausfüllung der verwendeten Löcher durch das verwendete mörtelartige System, unter Gestattung eines einfachen und präzisen Platzierens von verwendeten Befestigungselementen und/oder ohne dass es etwa zu einem Auslaufen einer für die Vorbereitung des Einbringens der Befestigungselemente verwendeten Masse kommt. Ferner soll es ermöglicht werden, eine erhöhte Flexibilität bezüglich der verwendeten Befestigungselemente zu gewährleisten, beispielsweise ohne das Erfordernis einer Abstimmung von Durchmessern von Schrauben und Fertigdübeln.

Die Lösung für ein oder mehrere Aspekte dieser Aufgabe besteht in einer eingangs genannten Verwendung, welche dadurch gekennzeichnet ist, dass ein ohne zusätzliches Erwärmen (insbesondere bei Umgebungstemperatur ohne aktives Erwärmen über die Umgebungstemperatur) flüssiges bis pastöses Mehrkomponenten-Kunstharzsystem nach oder während des Mischens seiner Komponenten (auch hier ohne zusätzliches (aktives) Erwärmen) in mindestens ein Loch (des Substrates; das Loch vorzugsweise ganz ausfüllend) eingebracht wird, gewartet wird, bis es dort (mindestens hinreichend) (aus-)gehärtet ist und dann mindestens ein Befestigungselement in die (mindestens hinreichend) (aus-)gehärtete resultierende (also verfestigte) Kunstharzmasse eingetrieben wird; bzw. einem diese Verwendung beinhaltenden Verfahren zur Fixierung von Befestigungselementen.

"(Mindestens hinreichend) (aus-)gehärtet" (wobei "aushärten", "Aushärten" im Rahmen der vorliegenden Offenbarung überall auch durch den neutraleren Ausdruck "härten" bzw. "Härten" ersetzt werden kann) bedeutet insbesondere, dass das verwendete Mehrkomponenten-Kunstharzsystem wenigstens soweit zur Aushärtung gebracht ist, dass Befestigungselemente darin eingetrieben werden können, insbesondere durch Schrauben, ohne dass sie z.B. unter dem Einfluss der Schwerkraft ihre Lage verändern und ohne dass das verwendete Kunstharzsystem im Moment des Eintreibens noch (insbesondere durch die dabei verwendeten Kräfte, außer höchstens noch im unmittelbaren Bereich des Eintreibens) flüssig-viskos verformbar ist. Erfindungsgemäß ist, wenn das oder die Befestigungselemente eingebracht werden, die Aushärtung im wesentlichen soweit fortgeschritten, dass insbesondere der entsprechende Mehrkomponenten-Kunstharzkörper auch bei Anwendung von Bewegung (was bei Thixotropie zu einer Verflüssigung führen könnte) nicht mehr fließfähig und im wesentlichen nicht mehr plastisch ist und das Eintreiben des Befestigungselements unter Einschneiden und Spalten der gehärteten Mehrkomponenten-Kunstharzmasse beispielsweise wie beim Eindrehen einer Schraube in Holz (wobei sich die Schraube ein Gegengewinde selbst schneidet) oder beim Einschlagen eines Nagels in Holz erfolgt.

Erfindungsgemäß wird die Zusammensetzung des erfindungsgemäß zu verwendenden Mehrkomponenten-Kunstharzsystems so gewählt, dass innerhalb von weniger als 5 Minuten, vorteilhaft nach weniger als 120 Sekunden, beispielsweise nach 60 bis 120 Sekunden nach dem Einbringen (insbesondere nach dem Beginn des Mischens) des erfindungsgemäß zu verwendenden Mehrkomponenten-Kunstharzsystems (bzw. der entsprechenden Mischung) die Härtung so weit fortgeschritten ist, dass die Fixierung von Befestigungselementen möglich ist, also das Kriterium "(mindestens hinreichend) zum Aushärten gebracht" im Sinne des vorangehenden Absatzes erfüllt ist.

Die Vorteile dieser erfindungsgemäßen Vorgehensweise liegen auf der Hand: Die flüssige bis (vorzugsweise) pastöse Konsistenz direkt nach dem Mischen, worunter, wie weiter unten dargelegt, in einer möglichen bevorzugten Ausführungsform der Erfindung auch schaumartige Konsistenz fällt, der verwendeten Kunstharzsysteme erlaubt einen guten Kontakt mit den Seiten-und Rückwänden eines Loches und ein einfaches Einbringen in ein Loch. Nicht erwünschte (z.B. aus dem Loch überstehende) Bereiche können vorteilhaft gewünschtenfalls vor dem Aushärten durch Abstreifen (beispielsweise mittels eines Spachtels oder dergleichen) und/oder danach (beispielsweise durch Polieren, Schleifen, Schneiden und/oder anderweitiges (spanabhebendes) Bearbeiten) entfernt werden, was auch Bestandteil einer bevorzugten erfindungsgemäßen Verwendung sein kann. Die Befestigungselemente können exakt platziert werden, sofern sie am Umfang Gewinde haben durch Drehen, sonst z.B. durch Schlagen oder Drücken oder entsprechende Maßnahmen, auch bei größeren Löchern, wie sie beispielsweise auch bei versehentlichem Ausschlagen oder Ausreißen von Wandputz oder anderen Substraten, in welchen das oder die Löcher vorliegen, entstanden sein können. Weiter ist es nicht, wie etwa bei Fertigdübeln und Schrauben, notwendig, den Innendurchmesser der Dübel und den Außendurchmesser der Befestigungselemente (z.B. Schrauben) aufeinander abzustimmen, so dass ein großes Maß an Flexibilität bezüglich der verwendbaren Befestigungsmittel erreicht werden kann. Ein Verzicht auf (passende) Fertigdübel ist möglich, und auch in schwierigen oder heterogenen Untergründen und bei unregelmäßiger Lochform kann eine gute Befestigung der Befestigungselemente erreicht werden.

Hervorzuheben ist, dass es sich bei den Mehrkomponenten-Kunstharzsystemen um solche handelt, deren Aushärtung nicht in erster Linie durch Aushärtung mineralischer Komponenten, wie Zement, gebrannter Kalk, Gips in Anhydridform oder dergleichen, sondern durch Polyreaktion (Oberbegriff für Polymerisation, Polykondensation und Polyaddition - bei der Polyreaktion werden Monomere zu Makromolekülen verknüpft) von organischen Verbindungen zustande kommt. Allerdings sind auch Zusätze solcher aushärtungsbefähigter anorganischer/mineralischer Materialien möglich, wie unten noch näher ausgeführt wird.

Die nachfolgenden spezifischeren Definitionen geben bevorzugte Varianten der mit ihnen näher definierten Begriffe wieder und können unabhängig voneinander einzeln oder zu mehreren oder zu allen solche allgemeineren Begriffe (auch in den Ansprüchen) ersetzen, was jeweils zu bevorzugten Ausführungsformen der Erfindung führt.

"Im Rahmen der Verwendung (aus-)härtend" bedeutet insbesondere vor und ggf. auch endgültig weiter während und nach der Fixierung eines bzw. mehrerer Befestigungselemente aushärtend.

Substrate sind in erster Linie von (mindestens hinreichend) fester Konsistenz und können beliebiger Art sein und aus beliebigen Stoffen oder Materialien bestehen; es kann sich beispielsweise um Wände, Decken, Mauern, Böden, Verputze oder andere Beschichtungen, Holz, Kunststoffe, Glas oder dergleichen handeln. "Fixierung in einem Substrat" bedeutet insbesondere, dass mindesten ein Teil des Befestigungselements, das von außen noch zugänglich bleibt, nach der Fixierung unterhalb der äußeren (der Seite des Einbringens des Befestigungselements zugewandten) Oberfläche des Substrates liegt. Ein Loch des Substrates ist eine Aushöhlung oder dergleichen, das von der äußeren Oberfläche des Substrates unterhalb dieser Oberfläche reicht und beliebig geformt (z.B. rund, unregelmäßig, eckig) und auf beliebige Weise hergestellt (z.B. durch Bohren, Ausstechen, Ausheben) oder bereits vorhanden sein kann.

"Im Rahmen der Verwendung aushärtend" bedeutet insbesondere, dass nach dem Mischen der Komponenten und dem Einbringen eines Mehrkomponenten-Kunstharzsystems in eines oder mehrere Löcher im Rahmen der erfindungsgemäßen Verwendung eine Aushärtung (Polymerisierung und gegebenenfalls Vernetzung) eines solche Komponenten beinhaltenden Mehrkomponentensystems stattfindet.

Unter erfindungsgemäß zu verwendenden Befestigungselementen sind z.B. Verankerungselemente, wie beispielsweise solche mit Außengewinden im Bereich der Befestigung im erhärteten erfindungsgemäßen Kunstharzsystem, die ein Eindrehen (Einschrauben) ermöglichen, z.B. Schrauben, oder Haken oder Ösen mit Gewinden, insbesondere Holzschrauben (= Schrauben zum Eindrehen in Holz), Schneidschrauben oder Blechschrauben, d.h., insbesondere solche Schrauben, die sich während der Drehung beim Eintreiben ihr Gewinde im Material selbst schneiden können, insbesondere solche, die am kopfabgewandten Ende (beispielsweise kegelförmig) zugespitzt sind; oder im Bereich der Befestigung im erhärteten erfindungsgemäßen Kunstharzsystem eine glatte Oberfläche aufweisende, nicht durch Drehen, sondern durch Eintreiben zu befestigende Befestigungselemente, wie Nägel bis hin zu Krampen oder Befestigungsklammern (die beispielsweise mit Tackern eingebracht werden können), Reißzwecken oder dergleichen zu verstehen.

Unter erfindungsgemäß zu verwendenden Mehrkomponenten-Kunstharzsystemen sind allgemein zwei oder mehr nach einem Mischen miteinander eine Aushärtung bewirkend reaktive bzw. reagierende, insbesondere vor dem Mischen nicht oder nur so langsam, dass Lagerfähigkeit ohne Aushärtung gewährleistet ist, aushärtende Komponenten beinhaltende Systeme zu verstehen, deren Komponenten (als solche oder durch Bestandteile darin) nach dem Mischen ein Aushärten (Polymerisieren, unter Umständen und je nach verwendeten Komponenten auch unter Vernetzung) bewirken, vorzugsweise solche, die mehrere, insbesondere zwei bis drei, unter Aushärtung und gegebenenfalls Aufschäumen miteinander reaktive Komponenten (bzw. Bestandteile in solchen Komponenten) beinhalten.

Beispiele für vor oder beim Einbringen an dem oder den gewünschten Löchern durch Mischung von zwei oder mehr nach einem Mischen eine Aushärtung bewirkend reaktiven (bzw. reagierenden) Komponenten beinhaltende Systeme sind insbesondere Mehr-, insbesondere Zwei- oder Dreikomponentensysteme, wie z.B. in der nachfolgenden Tabelle genannt, welche jeweils mindestens einen der ebenfalls nachfolgend genannten reaktiven Bestandteile in den Komponenten (a), (b) und gegebenenfalls (c) umfassen, wobei z.B. noch eine weitere Komponente vorgesehen sein kann:

| | | | |
|---|---|---|---|
| Mehrkomponenten-Kunstharzsystem | reaktiver Bestandteil in Komponente (a) | reaktiver Bestandteil in Komponente (b) | reaktiver Bestandteil in Komponente (c) (falls vorhanden) |
| Epoxidharz | Di- und/oder multifunktionelles Epoxid | di- und/oder polyfunktionelle Amine | - |
| Polyester | Di- und/oder Polycarbonsäureanhydrid. | Di- und/oder Polyol | - |
| Polyurethan | Di- und/oder Polyisocyanat (ggf. auch als Präpolymer) | Di- und/oder Polyole | - |
| (Meth-)Acrylpolyurethan | Urethanacrylat und/oder Urethanmethacrylat | radikalischer Härter (z.B. Benzoxylperoxid) | - |
| In situ hergestelltes Acrylpolyurethan* | Hydroxyacrylat und/oder Hydroxymethacrylat | (insbesondere radikalischer) Härter (z.B. Benzoylperoxid) | Di- und/oder Polyisocyanate (ggf. auch als Präpolymer) |
| Sonstige radikalisch härtbare Harze (sonstig = außer Acrylylpolyurethan und (Meth)acrylatharzen) | Epoxidharz, Polyester, Polyethylenoxidester oder Polyamid, das/ die jeweils härtbare (insbesondere olefinische) Gruppen, z.B. Vinylgruppen, beinhalten. | (insbesondere radikalischer) Härter (z.B. Benzoylperoxid) | - |
| Polyharnstoff | Di- und/oder Polyisocyanat (ggf. auch als Präpolymer), Di- und/oder Polyamin | Di- und/oder Polyamin | - |
| Polyurethan/Polyharnstoffmischprodukt | Di- und/oder Polyisocyanat (ggf. auch als Präpolymer), Di- und/oder Polyamin | Organische Di-oder Poly-(hydroxy und/ oder amino)-Verbindungen | - |
| (Meth)acrylatharze (Acrylat und/oder Methacrylatharze) | Alkyl- (= insbesondere Methyl-) acrylat und/oder -methacrylat | (insbesondere radikalischer) Härter, wie Benzyolperoxid. | - |
| Polyesteramid | Di- und oder Polycarbonsäure | Di- oder/und Polyamin und/ oder Di- oder/ und Polyol | |
| Mehrkomponenten-System auf Basis alkoxysilanterminierter Präpolymeren | alkoxysilanterminiertes Präpolymer¹, falls für entsprechendes Hart-Schaumstoffsystem weiter beinhaltend ein oder mehrere Ammonium- und/ oder Metall-carbonate, z.B. Natrium-oder Kalium-carbonat | Wasser und/oder organische oder anorganische Säure(n), z.B. Schwefel-, Salz-, Phosphor- oder Polyphosphorsäure, Mono- oder Di- oder Polycarbonsäuren, wie Essigsäure, Trifluoressigsäure, Fumarsäure, Maleinsäure, Citronensäure oder dergleichen, oder organische Sulfon- oder Phosphonsäuren. | - |

| | | | |
|---|---|---|---|
| ¹) Als alkoxysilanterminierte Präpolymere sind α-Aminosilane, wie sie beispielsweise in der (hier erneut bezüglich der Verbindungen (Verbindungsklassen und Einzelverbindungen) und deren Herstellung durch Bezugnahme aufgenommenen) Patentschriften WO 2004/00214, WO 2004/005156 und/oder WO 2005/000931 genannt sind, besonders bevorzugt - sehr bevorzugt sind (insbesondere ein mit der CAS-Nr. 611222-18-5 zugänglicher) Dimethoxy(methyl)silylmethylcarbamat- oder - harnstoff-terminierter Polyether oder dimethoxy(methyl)silyl-methylcarbamat-terminierte Oligo- oder Polyurethan-Derivate | | | |

Neben den in der vorstehenden Tabelle genannten Mehrkomponenten-Kunstharzsystemen sind auch geeignete Gemische von Komponenten für zwei oder mehr der genannten Mehrkomponenten-Kunstharzsysteme möglich.

Der Anteil der reaktiven Bestandteile am gesamten Mehrkomponentenkunstharzsystem (hier wie an anderen Stellen unter Bezug auf das Gewicht der in ein Substrat eingebrachten Gesamt-Mischung) beträgt beispielsweise 5 bis 95 Gew.-%.

Bei den in der vorstehenden Tabelle genannten Mehrkomponenten-Kunstharzsystemen kann vorgesehen sein, dass mindestens eine der erwähnten Komponenten (z.B. Komponente (c))und/oder mindestens eine weitere Komponente, die jeweils keine Isocyanate beinhalten, Wasser enthalten, eine andere Isocyanate, oder eine Komponente kann Wasser, einer andere Säure (z.B. ein oder mehrere der in der Tabelle genannten Säuren) enthalten, was jeweils die Bildung von Kohlendioxid und somit ein Aufschäumen nach dem Mischen der Komponenten herbeiführt und so erfindungsgemäß verwendbare Mehrkomponenten-Hart-Schaumstoffsysteme zugänglich macht, die besonders bevorzugt sind. Insbesondere die zu Polyurethanen oder Polyharnstoffen führende Chemie bietet den Vorteil, die verwendeten Kunstharzsysteme auf einfache Weise schäumend einstellen zu können, so dass ein guter Verbund mit der Lochwandung gebildet wird bzw. im Fall von Hohlbaustoffen (beispielsweise bei Hohlräumen hinter (z.B. Gipskarton-) Platten oder Kacheln, bei Hohlblocksteinen, bei Hohlräumen hinter Bretterverschalungen oder dergleichen) Formschluss des aus dem Mehrkomponenten-Hartschaumstoffsystem bei der Verwendung gebildeten hinreichend ausgehärteten Hartschaumstoffes ermöglicht wird, was die Fixierung (Befestigung) von Befestigungselementen auch bei Vorliegen von Hohlräumen erlaubt und erleichtert, auch dort, wo ein Fertigdübel keinen ausreichenden Halt finden würde. Daher ist die erfindungsgemäße Verwendung solcher Mehrkomponenten-(Hart-) Schaumstoffsysteme als Mehrkomponenten-Kunstharzsysteme bei Vorliegen solcher Hohlräume besonders bevorzugt. Vorteilhaft wird die Menge der ein Aufschäumen bewirkenden Komponenten so eingestellt, dass das Volumen des Mehrkomponenten-Hartschaumstoffsystems durch das Aufschäumen auf das 1 (insbesondere 1,01)- bis 5-fache, beispielsweise das 1,05- bis 3-fache (des Volumens ohne Aufschäumen) erhöht wird.

Bei olefinischen Systemen (z.B. (meth)acrylat- oder Vinylgruppen beinhaltenden Systemen) verwendete Härter z.B. sind im Rahmen der vorliegenden Erfindung beispielsweise solche Verbindungen (= Initiatoren), die in der Lage sind, bei Molekülen mit olefinischen (Doppel-) Bindungen eine Kettenreaktion zur Polymerisation unter Addition von Reaktionsprodukten von Härter und zu polymerisierenden Molekülen an Doppelbindungen weiterer Moleküle zu initiieren; hierzu eignen sich kationische, anonische oder insbesondere radikalbildende Initiatoren (welche bei olefinische Gruppen, wie unsubstituierte oder substituierte Vinylgruppen tragenden Monomeren oder Präpolymeren radikalische Polymerisation bewirken), wie z.B. organische Peroxide, wie Diacylperoxide, z.B. Benzoyl- oder Bis(4-chlorobenzoyl)peroxid, Ketonperoxide oder Alkylperester, wie tert-Butylperbenzoat, oder ferner Azoinitiatoren, Persulfate oder Perborate, sowie Mischungen davon. Die Initiatoren können in reiner Form oder vorzugsweise phlegmatisiert vorgesehen sein, z.B. mit Gips, Kreide, pyrogener Kieselsäure, Phthalaten, Chlorparaffin oder dergleichen, und gewünschtenfalls versetzt mit einem Füllstoff, insbesondere wie oben genannt, und/oder (insbesondere zur Herstellung einer Paste oder einer Emulsion) einem Lösungsmittel, insbesondere Wasser; wobei insbesondere der Initiator in einer Menge von 1 bis 80, vorzugsweise 20 bis 60 Gew.-% und das Phlegmatisierungsmittel in einer Menge von 1 bis 80, vorzugsweise 30 bis 70 Gew.-%, jeweils bezogen auf die Gesamtmenge an Härterkomponente, beinhaltet sein kann, vorgesehen sein. Bei anderen, beispielsweise in der obigen Tabelle verwendeten reaktiven Systemen können, wie dem Fachmann bekannt ist, bestimmte Komponenten ebenfalls als "Härter" bezeichnet werden.

Besteht ein erfindungsgemäß zu verwendendes Mehrkomponenten-Kunstharzsystem aus zwei Komponenten (z.B. (a) oder (b), wie oben definiert), können diese beispielsweise in einem Verhältnis von (a): (b) gleich 20: 1 bis 1: 20, beispielsweise 10: 1 bis 1: 10 Gewichtsanteilen vorgesehen sein.

Bei drei Komponenten (a), (b) und (c), wie oben definiert, werden diese beispielsweise in einem Verhältnis von (a) : (b) : (c) von (1 bis 20) _{:} (20 bis 1) _{:} (0,01 bis 1) Gewichtsanteilen eingesetzt.

Mehrkomponenten-Kunstharzsysteme können vorzugsweise Mehrkomponenten-Hartschaumstoffsysteme sein. Bei diesen findet beim Mischen ein Aufschäumen statt, was einen besonders guten Kontakt der Mischung mit den Lochwänden und z.B. ein Einbringen nach dem Einbringen Lochwandungen hinterschneidender Teile in Hohlräume ermöglicht und eine besonders gute Eintreibbarkeit und vorhergehende Aufsetzbarkeit (aufgrund der rauen äußeren Oberfläche) von Befestigungselementen ermöglicht.

"Umfassen" oder "beinhalten" bedeutet, dass neben den jeweils genannten Bestandteilen auch weitere Reaktanden und/oder Zusätze vorhanden sein können, wie vor- und/oder nachstehend genannt. Dies im Unterschied zu "enthalten", welches bedeutet, dass die zugehörigen Bestandteile abschließend aufgeführt wären und daneben keine weiteren Bestandteile mehr vorliegen können.

Die erfindungsgemäß verwendeten Mehrkomponenten-Kunstharzsysteme können vorzugsweise in Form von mehrkomponentigen (insbesondere 2- oder auch 3-komponentigen) Kits verwendet werden.

Unter derartigen mehrkomponentigen Kits sind insbesondere solche zu verstehen, die mindestens zwei (räumlich) getrennte Komponenten (a) und (b), wie unten definiert, beinhalten, d.h. solche Verpackungen, welche zwei oder mehr separate, miteinander verbundene und/oder ineinander verschachtelte Behältnisse (Kompartimente) umfassen, deren erste mindestens eine erste reaktive Komponente beinhaltet, z.B. eine Komponente (a), deren zweite mindestens eine weitere Komponente, beispielsweise bei einem Zwei-Komponenten-System eine Komponente (b), beinhaltet, wobei auch noch mindestens eine dritte Komponente (c) in einem weiteren Kompartiment (oder separat) beinhaltet sein kann, und gewünschtenfalls weitere Kompartimente mit weiteren Reaktanden oder Zusätzen vorgesehen sein können. Darunter ist insbesondere eine Ausrüstung zu verstehen, die es ermöglicht, die Komponenten, z.B. bei Zwei- oder Dreikomponentenkits (a) und (b) und, falls vorhanden, (c), vorzugsweise gleichzeitig (c) sowie gewünschtenfalls weitere Reaktanden und Zusätze zur Herstellung eines wie vor- und nachstehend beschrieben erhältlichen aushärtenden bzw. schließlich ausgehärteten Mehrkomponenten-Kunstharzsystems am oder nahe dem gewünschten Einsatzort, beispielsweise direkt vor oder in einem Loch so zu vermischen und erforderlichenfalls in einem weiteren Schritt einzubringen, dass dort die Bildung von aus den jeweiligen Komponenten erhältlichen gemischten, aushärtenden und schließlich ausgehärteten Mehrkomponenten-Kunstharzsystemen stattfinden kann bzw. stattfindet. Hierbei kann es sich um getrennte, aber beispielsweise als Set, etwa in einer gemeinsamen Verpackung oder einem gemeinsamen Gebinde, angebotene Behältnisse für die Komponenten, z.B. (a), (b) und ggf. (c), und/oder gegebenenfalls weitere Reaktanden und/oder Zusätze handeln, beispielsweise getrennte Flaschen, Ampullen, Beutel, Tuben oder Kartuschen für die einzusetzenden Komponenten, oder vorzugsweise um Mehrkammersysteme mit mehreren an- und/oder miteinander eine Packungseinheit bildenden Kompartimenten, wie Zwei-, Drei- oder ferner Mehrkammerkartuschen (mit koaxial ineinander oder (z.B. parallel nebeneinander angeordneten) an- und/oder ineinander Behältnissen oder Kompartimenten oder Kammern zur Aufnahme der jeweiligen Komponenten), um Tuben oder Beutel mit entsprechenden Kompartimenten aus Folien oder aus Kunststoff, oder Kombinationen von zwei oder mehr derartigen Behältnissen, in einer weiteren Ausführungsform (insbesondere im Falle von Kartuschen) in Kombination mit Auspressgeräten, wie Ausdrückpistolen, und/oder Statikmischern oder Düsen/Kanülen zum Auspressen und/ oder ferner Behältnissen zum Mischen, wie Schüsseln oder Bechern, handeln.

Die erfindungsgemäße Verwendung beinhaltet insbesondere auch die sinnfällige Herrichtung von Komponenten und Kits entsprechend einsetzbarer Mehrkomponenten-Kunststoffsysteme, beispielsweise mit (z.B. verbalen und/oder bildlichen) Anweisungen zu deren entsprechender Verwendung, etwa als Aufkleber, Bedruckungen oder durch andere werbliche Maßnahmen.

Neben den genannten Bestandteilen können die jeweiligen Komponenten und/oder weitere Komponenten auch weitere Zusätze beinhalten, wie Katalysatoren ((beispielsweise in einem Gewichtsanteil von 0,01 bis 20 %, z.B. 0,01 bis 15 % bezogen auf die Masse aller Kunstharz-Komponenten), Beschleuniger und/oder Inhibitoren, Farbstoffe, Pigmente, nicht reaktive Verdünner, wie Lösungsmittel, Stabilisatoren, Weichmacher, Thixotropiermittel (besonders bevorzugt, um insbesondere auch bei nicht schäumenden Mehrkomponenten-Kunstharzsystemen ein Ausfließen nach dem Einbringen in ein Loch zu vermindern oder zu verhindern, beispielsweise in einem Gewichtsanteil von 1 bis 10 % bezogen auf die Masse aller Kunstharz-Komponenten), Diepergiermittel, Netzmittel, Emulgatoren, Füllstoffe (beispielsweise in einem Gewichtsanteil von 2 bis 50 % bezogen auf die Masse aller Kunstharz-Komponenten), z.B. Sand, Kreide, Zement, Glas, Quarz (z.B. als Quarzmehl oder Quarzsand) Kunststoffe (wie Polypropylen (PP) oder Polyethylen (PE)), Holz, Tone, gelöschter Kalk oder dergleichen im wesentlichen nichtreaktives partikuläres Material, Antioxidantien, Fasern, z.B. Cellulosefasern, Glasfasern, Kohlefasern oder Kunstfasern, Licht- und/oder UV-Stabilisatoren (beispielsweise in einem Gewichtsanteil von 0,005 bis 5 % bezogen auf die Masse aller Kunstharz-Komponenten), HALS-Stabilisatoren, Haftvermittler, Flammschutzmittel, Schaumstabilisatoren und/oder Reaktivverdünner (beispielsweise in einem Gewichtsanteil von 0,01 bis 20 % bezogen auf die Masse aller Kunstharz-Komponenten), wie niedermolekulare Verbindungen, die über reaktive Vinyl- und/oder Alkoxysilylgruppen verfügen, und/oder vergleichbare Zusätze. Ein oder mehrere derartige Zusätze können vorhanden sein in einer oder mehrerer der Komponenten für die erfindungsgemäß einzusetzenden Mehrkomponenten-Kunstharzsysteme.

Bezogen auf die Gesamtmasse aller Komponenten nach dem Mischen eines jeweils eingesetzten Mehrkomponenten-Kunstharzsystems während der erfindungsgemäßen Verwendung können solche Zusätze (alle zusammengenommen) in einer Gesamtmenge von insgesamt beispielsweise 0,001 bis 80 Gewichtsprozent vorgesehen sein.

Besonders bevorzugte ist ein Zusatz von Festschmierstoffen, wie z.B. Molybdänsulfid, Polytetrafluorethylen, mikronisierten Wachsen oder Graphit, und/oder der Zusatz von (insbesondere bei Raumtemperatur) flüssigen oder halbflüssigen Schmiermitteln wie z.B. Silikone, z.B. Polydimethylsiloxan, Mineralölen, (halbfesten oder pastösen) Paraffinen oder dergleichen. Ein derartiger Zusatz, vorzugsweise in einer Gesamtmasse von beispielsweise 0,1 bis 20 Gewichts-Prozent, beispielsweise von 0,1 bis 5 Gewichts-Prozent bezogen auf die Gesamtmasse eines Gemisches der Komponenten eines erfindungsgemäß verwendeten Mehrkomponenten-Kunststoffsystems, ermöglicht eine bevorzugte Ausführungsform der Erfindung, indem die zugesetzten Schmierstoffe eine Verringerung der für das Eintreiben von Befestigungelementen benötigten Kräfte (z.B. Drehmoment bei Schrauben, Schlagkraft oder Druck bei Nägeln etc.) bewirken können. Bevorzugte Drehmomente liegen beispielsweise im Bereich von bis zu höchstens 20 Nm, in möglichen bevorzugten Ausführungsformen 0,3 bis 6, insbesondere 0,7 bis 3 Nm (bezogen auf eine Schraube und Bedingungen wie unten für die Messung der Auszugskraft beschrieben).

Die Erfindung betrifft daher in einer besonderen Ausführungsform auch Mehrkomponenten-Kunstharzsysteme, insbesondere entsprechende Kits, welche in einer oder mehreren ihrer Komponenten ein oder mehrere derartige Schmierstoffe beinhalten, in einer beispielhaften bevorzugten Ausführungsform in den angegebenen Mengen.

Die Komponenten eines erfindungsgemäß verwendeten Mehrkomponenten-Kunstharzsystems werden kurz bzw. direkt vor dem Ein- oder Aufbringen der Befestigungsmasse gemischt (beispielsweise in geeigneten Gefäßen oder auf geeigneten Flächen) und/oder erst beim Einbringen in das oder die Löcher, beispielsweise in einer bevorzugten Ausführungsform unter Verwendung von Mehrkammersystemen, wie Kartuschen mit Statikmischern.

"Im Rahmen [oder "bei"] der Verwendung aushärtend" bedeutet, dass nach dem Mischen der Komponenten eines erfindungsgemäßen Mehrkomponenten-Kunstharzsystems die reaktiven Bestandteile miteinander unter Bildung von Polymeren und (falls entsprechende drei- oder mehrvalente Reaktanden vorgesehen sind) gegebenenfalls unter Vernetzung miteinander reagieren und so zu einem Erstarren des Gemisches führen.

"Flüssig bis pastös" bedeutet, dass das Gemisch der Komponenten (vorzugsweise bereits die Komponenten) des Mehrkomponenten-Kunstharzsystems vor dem Aushärten eine flüssige bis pastöse Konsistenz aufweist, die ein (vorzugsweise leichtes) Einbringen in Löcher in Substraten ermöglicht. Es kann auch (durch geeignete Zusätze wie Thixotropiermittel) thixotrope Eigenschaften haben, d.h. sich bei Bewegung verflüssigen (Solzustand) und bei fehlender Bewegung (z.B. nach dem Einbringen) erstarren (Gelform). Dies ermöglicht vorteilhaft, ein Ausfließen aus einem Loch nach dem Einbringen zu verringern oder zu vermeiden. Die Komponenten und/oder die Gemische davon können als Lösungen und/oder Dispersionen, wie Suspensionen und/oder Emulsionen, vorliegen.

"Ohne zusätzliches Erwärmen" flüssig bedeutet insbesondere, dass die Komponenten eines verwendeten Mehrkomponenten-Kunstharzsystems vor und nach dem Mischen und beim Einbringen in ein Loch nicht durch zusätzliche Maßnahmen (wie Aufheizen, Erhitzen, Bestrahlen oder dergleichen, also aktive Wärmezufuhr durch zusätzliche Hilfsmittel) aufgewärmt werden. Die Temperatur wird so im wesentlichen durch das Mischen und Einbringen über die Temperatur der bei der Verwendung umgebenden Luft und/oder des Substrates und der einzubringenden flüssigen bis pastösen Mischung des Mehrkomponenten-Kunstharzsystems bestimmt (in letzterer kann durch die ablaufenden chemischen Reaktionen eine gewisse Wärme entstehen, die nicht als aktive Wärmezufuhr zu verstehen ist), also nicht durch aktive Wärmezufuhr. Insbesondere erfolgt keine zusätzliche Erwärmung durch zusätzliche Vorrichtungen, wie Heizpistolen oder dergleichen. Vielmehr liegt die Mischung der Komponenten eines Mehrkomponenten-Kunstharzsystems bei der Verwendung ohne (beispielsweise durch zusätzliche Vorrichtungen bewirkte) zusätzliche Wärmezufuhr und beim Einbringen in ein Loch bereits im flüssigen bis pastösen Zustand vor, solange sie nicht ausgehärtet und/oder falls sie nicht wegen Thixotropie wegen fehlender Bewegung erstarrt ist. Eine Verflüssigung durch zusätzliches Erwärmen wird demnach nicht vorgenommen, allenfalls Durchmischen oder Bewegung können (insbesondere bei thixotropen Systemen) der für den Verwendungszweck ausreichenden Verflüssigung. Vorzugsweise wird auch keine Erwärmung der Befestigungselemente vor oder bei dem Eintreiben in das (mindestens hinreichend) ausgehärtete Mehrkomponenten-Kunstharzsystem vorgenommen. Dies vereinfacht die Handhabung beträchtlich.

In einer möglichen bevorzugten Ausführungsform werden vernetzende Mehrkomponenten-Kunstharzsysteme verwendet, also solche, die zu Duroplasten reagieren, die nach dem Aushärten nicht mehr durch Erwärmen (z.B. bei starker Sonneneinstrahlung oder dergleichen) schmelzbar sind.

Die Fixierung (insbesondere das Eintreiben) eines Befestigungselements in einem in ein Loch eingebrachtes (mindestens hinreichend) ausgehärtetes Mehrkomponenten-Kunststoffsystem ist zum einen möglich, indem in die ausgehärtete Masse ein oder mehrere zur Aufnahme des oder der Befestigungselemente geeignete Löcher mit Durchmessern gleich oder vorzugsweise kleiner als dem Außendurchmesser der Befestigungselemente ausgebildet werden, z.B. durch Bohren. Vorzugsweise geschieht das Einbringen des oder der Befestigungselemente jedoch durch direktes Eintreiben in die ausgehärtete Masse, vorzugsweise unter Verwendung am Vorderende zugespitzter Befestigungselemente, wie Schrauben, die sich ihr Gewinde im ungebenden Material dann selbst schneiden, oder Nägel, Klammern oder dergleichen, z.B. durch Einschrauben unter Druck oder Einschlagen oder Einschießen (z.B. mit Tacker-Vorrichtungen).

Das Montageverhalten (exemplarisch belegt als benötigtes Drehmoment beim Eindrehen von Schrauben) und die Ausreißkraft von Befestigungselementen in Prüfkörpern aus ausgehärteten erfindungsgemäß verwendeten Mehrkomponenten-Kunststoffmassen können wie folgt geprüft werden:

Zur Prüfung des Verbundes zwischen Befestigungselement und ausgehärtetem Kunstharzsystems wird das jeweilige 2-Komponenten-Kunstharzsystem in einem sehr gut gereinigten gereinigten Bohrloch der Abmessungen 10 mm (Durchmesser) x 50 mm (Bohrlochtiefe), in Beton eingebohrt ist, mittels einer Zweikammerkartusche mit Statikmischer eingebracht. In die ausgehärtete Kunstharzmasse wird eine für das Einschrauben in Holz geeignete, am Vorderende zugespitzte Schneidschraube (5 x 70 mm, SPAX® der Firma Altenloh, Brinck & Co - Gruppe, Ennepetal, Deutschland) unter Messung des dazu erforderlichen Drehmomentes 45 mm tief eingeschraubt. Anschließend wird durch einen Auszugversuch mit enger Abstützung die Versagenslast ermittelt. Die Prüfung erfolgt mittels eines Dreibeinstativs mit Hydraulikzylinder und Kraftmessdose mit einer derart eingestellten Geschwindigkeit, dass der Bruch nach ca. 5 bis 30 sec. erfolgt.

Die erzielten Auszugskräfte liegen beispielsweise im Bereich derjenigen von Kunststoffdübeln in Beton.

Durch Zusatz von Schmierstoffen kann das zum Eindrehen der Schraube erforderliche Drehmoment verringert werden, beispielsweise um 20 bis 80 %, was eine mögliche bevorzugte Ausführungsform der Erfindung darstellen kann.

Bevorzugte Ausführungsformen der Erfindung finden sich in den Ansprüchen, vorzugsweise in den Unteransprüchen. Die Ansprüche werden daher hier durch Bezugnahme als Bestandteil der Beschreibung aufgenommen.

Stärker bevorzugte Ausführungsformen der Erfindung ergeben sich auch, wenn einer, mehrere oder alle allgemeineren in den Ansprüchen verwendeten Ausdrücke durch vor- oder nachstehend definierte spezifischere Definitionen ersetzt werden.

Besonders bevorzugte Ausführungsformen der Erfindung finden sich auch in den Beispielen.

Die nachfolgenden Beispiele dienen der Illustration der Erfindung, ohne ihren Umfang einzuschränken.

### Beispiel 1: Zwei-Komponenten-Hartschaumstoffsystem und erfindungsgemäße Verwendung:

Ein Zwei-Komponenten-Hartschaumstoffsystem basierend auf folgenden Komponenten wird hergestellt:
Komponente (a*):
   - 0,88 Gewichtsanteile Hexan-1,6-diol
   - 3,44 Gewichtsanteile Polypropylenglykol, propylenglykolinitiert, Durchschnittsmolmasse 400, Hydroxyzahl 260, Funktionalität 2,0, z.B. Voranol P 400 (Warenzeichen der "The Dow Chemical Company", Midland, Michigan, USA)
   - 0,09 Gewichtsanteile 33 % 1,4-Diazabicyclo[2.2.2]oktan in 67% Dipropylenglykol, z.B. DABCO 33 LV der Firma Air Products and Chemicals Inc., Allentown, PA, USA
   - Wasser 0,3 %.
Komponente (b*):
   5,59 Gewichtsteile Polyisocyanat mit 31 Gew.-% NCO-Gruppen auf Basis von polymerem Methylenbisphenyldiisocyanat (PMDI), z.B. Desmodur 44 V 10L der Bayer AG, Leverkusen, Deutschland.
Komponente (c*):
   0,79 Gewichtsteile Füllstoff Polypropylen (PP)

Die Komponenten (a*), (b*) und (c*) werden in einem Kunststoffbecher unter Rühren gemischt. Nach mindestens hinreichendem Aushärten wird als Befestigungselement eine Holzschraube in die ausgehärtete Schaummasse eingedreht. Dann wird die Prüfung des Montageverhaltens und der Ausreißkraft von Befestigungselementen in Prüfkörpern vorgenommen, wie oben beschrieben.

Die Komponenten können in einer Zwei- oder Mehrkammerkartusche (z.B. Doppelspritze) separat aufbewahrt und zur erfindungsgemäßen Verwendung mittels einer Drückpistole durch einen Statikmischer unter Mischen und Aufschäumen (Reaktion des Wassers aus Komponente 1 mit Isocyanatgruppen aus Komponente 2 unter Kohlendioxidfreisetzung) in ein Loch in einer Wand eingebracht werden.

### Beispiele 2 bis 8: Weitere Zweikomponenten-Hartschaumsysteme und deren Verwendung

Zweikomponenten-Hartschaumsysteme mit den in der nachfolgenden Tabelle genannten Zusammensetzungen werden hergestellt und wie oben für die Ermittlung von Auszugskräften beschrieben in Bohrlöcher in Beton eingebracht und die Drehmomente der Schrauben beim Eindrehen ermittelt und die Auszugskräfte wie oben beschrieben bestimmt:

| Bestandteil | Beispiel | | | | | | |
|---|---|---|---|---|---|---|---|
| | 2 | 3 | 4 | 5 | 6 | 7 | 8 |
| Beschreibung | ohne Füllstoff | Kreide, ohne PTFE | Kreide, mit PTFE | Quarz, ohne PTFE | Quarz, mit PTFE | Quarz, ohne PTFE | Quarz, mit PTFE |
| | | | | | | | |
| Rohstoff | Gew.-% | Gew.-% | Gew.-% | Gew.% | Gew.% | Gew.% | Gew.% |
| | | | | | | | |
| Komponente a* | | | | | | | |
| Butan-1,4-diol | 10,07 | 7,86 | 7,86 | 9,20 | 9,13 | 7,86 | 7,80 |
| Wasser, demi-neralisiert | 0,20 | 0,16 | 0,16 | 0,19 | 0,18 | 0,16 | 0,16 |
| DABCO 33 LV | 0,89 | 0,70 | 0,70 | 0,82 | 0,81 | 0,70 | 0,69 |
| HDK H 18 | - | 0,70 | 0,70 | 0,82 | 0,81 | 0,70 | 0,69 |
| Voranol EP2010 | 16,78 | 12,74 | 12,74 | 14,93 | 14,81 | 12,74 | 12,65 |
| Voranol P 400 | 16,80 | 12,76 | 12,76 | 14,95 | 14,83 | 12,76 | 12,67 |
| Alsigran Micro 5 | - | - | - | 4,09 | 4,06 | 10,47 | 10,40 |
| CTP PP-F | - | - | 0,35 | - | 0,41 | - | 0,35 |
| Calcilit 6 HS | - | 10,47 | 10,12 | - | - | - | - |
| | | | | | | | |
| Komponente b* | | | | | | | |
| Desmodur 44 V 70 L | 55,26 | 41,47 | 41,17 | 49,00 | 48,53 | 41,17 | 40,84 |
| HDK H 18 | - | 0,84 | 0,84 | 1,00 | 0,99 | 0,84 | 0,83 |
| Alsigran Micro 5 | - | - | - | 5,00 | 4,95 | 12,60 | 12,50 |
| CTP PP-F | - | - | 0,42 | - | 0,50 | - | 0,42 |
| Calcilit 6 HS | - | 12,60 | 12,18 | - | - | - | - |
| | | | | | | | |
| Eigenschaften bei der | | | | | | | |
| Verwendung | | | | | | | |
| Eindrehmoment [nM] | 1,86 | 2,24 | 1,08 | 2,06 | 1,35 | n.b.¹ | 2,14 |
| Auszugskraft [kN] | 7,06 | 7,30 | 3,19 | 5,79 | 3,81 | n.b. | 7,84 |
| Volumenzunahme [%] | n.b. | 33 | 43 | 46 | 67 | 26 | 33 |

| | | | | | | | |
|---|---|---|---|---|---|---|---|
| n.b.: nicht bestimmt. ¹) Schraube schnitt sich je nach Druck nicht gut in die Masse ein, sondern fräste leicht einen Hohlraum | | | | | | | |

Soweit nicht in Beispiel 1 beschrieben, haben die Rohstoff-Bezeichnungen folgende Bedeutungen:
- HDK H 18®: pyrogene Kieselsäure, Wacker Chemie AG, München, Deutschland.
- Voranol® EP2010: Diol basierend auf Propylenoxid und Ethylenoxid, Mloekulargewicht ca. 2000, The Dow Chemical Company, Midland, Michigan, USA.
- Alsigran® Micro 5: Quarzmehl der Firma Alpha Calcit, Köln, Deutschland
- CTP PP-F: Polytetrafluorethylen-Pulver, Fuchs Lubritech GmbH, Weilerbach, Deutschland
- Calcilit 6 HS®: gecoatetes Calciumcarbonat, Alpha Calcit, Köln, Deutschland

## Patentansprüche

1. Verwendung eines flüssigen bis pastösen, im Rahmen der Verwendung aushärtenden Mehrkomponenten-Kunstharzsystems zur Fixierung von ein oder mehreren Befestigungselementen in einem Substrat, wobei ein ohne zusätzliches Erwärmen flüssiges bis pastöses Mehrkomponenten-Kunstharzsystem nach oder während des Mischens seiner Komponenten in mindestens ein Loch eingebracht wird, gewartet wird, bis es dort mindestens hinreichend gehärtet ist und dann mindestens ein Befestigungselement in die mindestens hinreichend gehärtete resultierende Kunstharzmasse eingetrieben wird, wobei die Zusammensetzung des Mehrkomponenten-Kunstharzsystems so gewählt ist, dass die Härtung innerhalb von weniger als 5 Minuten nach dem Einbringen des Kunstharz-Systems so weit fortgeschritten ist, dass die Fixierung der Befestigungselemente möglich ist, ohne dass sie unter dem Einfluss der Schwerkraft ihre Lage verändern und ohne dass das verwendete Kunstharzsystem noch flüssig-viskos verformbar ist, wobei dann die Mehrkomponenten-Kunstharzmasse nicht mehr fließfähig und im Wesentlichen nicht mehr plastisch ist und das Eintreiben des Befestigungselements unter Einschneiden und Spalten der gehärteten Mehrkomponenten-Kunstharzmasse erfolgt.

2. Verwendung nach Anspruch 1, **dadurch gekennzeichnet, dass** als Befestigungselemente ein oder mehrere Schrauben, Schraubhaken, Schraubösen, Nägel, Krampen, Befestigungsklammern oder Reißzwecken eingetrieben werden.

3. Verwendung nach einem der Ansprüche 1 oder 2, wobei als Mehrkomponenten-Kunstharzsystem ein solches verwendet wird, welches zwei oder drei unter Aushärtung und vorzugsweise Aufschäumen miteinander reagierende Komponenten beinhaltet.

4. Verwendung nach einem der Ansprüche 1 bis 3, wobei als Mehrkomponenten-Kunstharzsystem mindestens eins aus der Gruppe, die aus Epoxidharz, Polyester, Polyurethan, Acrylpolyurethan, Polyharnstoff, Polyurethan/Polyharnstoffmischprodukt, (Meth)acrylatharz, sonstigem radikalisch härtbarem Harz, Polyesteramid, und Systemen auf Basis alkoxysilanterminierter Präpolymeren ausgewählt sind, verwendet wird.

5. Verwendung nach einem der Ansprüche 1 bis 4, wobei als Mehrkomponenten-Kunstharzsystem ein Mehrkomponenten-Hartschaumstoffsystem verwendet wird.

6. Verwendung nach Anspruch 5, wobei die Volumenzunahme beim Aufschäumen auf das 1,01- bis 5-fache des Volumens der Komponenten ohne Aufschäumen, vorzugsweise auf das 1,05- bis 3-fache, eingestellt wird.

7. Verwendung nach einem der Ansprüche 1 bis 6, wobei als Mehrkomponenten-Kunstharzsystem ein Polyurethan-System verwendet wird.

8. Verwendung nach einem der vorstehenden Ansprüche 1 bis 7, wobei als Mehrkomponenten-Kunstharzsystem ein solches aus zwei Komponenten (a) und (b), die in einem Gewichtsverhältnis (a) _{:} (b) von 20 : 1 bis 1 : 20, oder ein solches aus drei Komponenten (a), (b) und (c), die in einem Gewichtsverhältnis von (1 bis 20) : (20 bis 1) : (0,01 bis 1) eingesetzt werden, verwendet wird.

9. Verwendung nach einem der Ansprüche 1 bis 8, wobei als Mehrkomponenten-Kunstharzsystem 2- oder 3-komponentige Kits, insbesondere in Form von Mehrkdimnersystemen, verwendet werden.

10. Verwendung nach einem der Ansprüche 1 bis 9, wobei ein Mehrkomponenten-Kunstharzsystem verwendet wird, das in einer oder mehreren seiner Komponenten ein oder mehrere weitere Zusätze, insbesondere Katalysatoren, Beschleuniger, Inhibitoren, Farbstoffe, Pigmente, Verdünner, Stabilisatoren, Weichmacher, Thixotropiermittel, Dispergiermittel, Netzmittel, Emulgatoren, Füllstoffe, Antioxidantien, Fasern, Licht- und/oder UV-Stabilisatoren, HALS-Stabilisatoren, Haftvermittler, Schaumstabilisatoren, und/oder Reaktiverdünner beinhaltet.

11. Verwendung nach einem der Ansprüche 1 bis 10, wobei als Mehrkomponenten-Kunstharzsystem ein vernetzendes System verwendet wird, das zu einem Duroplasten reagiert.

12. Verwendung nach einem der Ansprüche 1 bis 11, insbesondere nach einem der Ansprüche 6 oder 7, wobei als das oder die Befestigungselemente ein solches oder solche mit Außengewinde, insbesondere eine Schraube, ein Schraubhaken oder eine Schrauböse, verwendet wird oder werden und das Eindrehmoment für das jeweilige Befestigungselement durch Wahl der Zusammensetzung des Mehrkomponenten-Kunstharzsystems im Bereich von bis höchstens 20 Nm, vorzugsweise von 0,3 bis 6, insbesondere von 0,7 bis 3 Nm eingestellt ist.

13. Verwendung nach einem der Ansprüche 1 bis 12, wobei durch entsprechenden Wahl der Zusammensetzung des Mehrkomponenten-Kunstharzsystems innerhalb von weniger als 5 Minuten, besonders vorteilhaft von weniger als 120 Sekunden, nach dem Einbringen oder insbesondere nach dem Beginn des Mischens des Mehrkomponenten-Kunstharzsystems die Härtung soweit fortgeschritten ist, dass die Fixierung von dem oder den Befestigungselementen möglich ist.

14. Verwendung nach einem der Ansprüche 1 bis 13, wobei vor dem Eintreiben eines Befestigungselements überstehende oder nicht gewünschte Teile vor dem Aushärten, insbesondere durch Abstreifen, und/oder nach dem mindestens hinreichenden Aushärten der Kunstharzmasse, insbesondere durch Schleifen, Polieren, Schneiden und/oder anderweitiges Bearbeiten, entfernt werden.

15. Verfahren zur Fixierung von Befestigungselementen, welches eine Verwendung nach einem der Ansprüche 1 bis 14 eines in einem dieser Ansprüche genannten Mehrkomponenten-Kunstharzsystems beinhaltet.

16. Verwendung nach einem der Ansprüche 1 bis 14, wobei das Mehrkomponenten-Kunstharzsystem in einer oder mehreren seiner Komponenten einen oder mehrere Schmierstoffe beinhaltet.

17. Verwendung eines Mehrkomponenten-Kunstharzsystems nach Anspruch 16, bei dem es sich um ein Polyurethansystem handelt.

18. Verwendung eines Mehrkomponenten-Kunstharzsystems nach Anspruch 16 oder nach Anspruch 17, bei dem es sich um ein Mehrkomponenten-Hartschaumstoffsystem handelt.

19. Verwendung eines Mehrkomponenten-Kunstharzsystems nach einem der Ansprüche 16 bis 18, in dem als Schmiermittel mindestens ein Festschmierstoff und/oder mindestens ein flüssiges oder halbflüssiges Schmiermittel, insbesondere ausgewählt aus Molybdändisulfid, Polytetrafluorethylen, mikronisierten Wachsen, Graphit, Silikonen, Mineralölen und Paraffinen, vorgesehen ist.

## Claims

1. Use of a liquid to paste-like multi-component synthetic resin system which cures in the course of use, for fixing one or more fastening elements in a substrate, wherein a multi-component synthetic resin system which is liquid or paste-like without additional heating is, after or during mixing of its components, introduced into at least one hole, waiting is carried out until it has at least adequately cured there, and then at least one fastening element is driven into the at least adequately cured resulting synthetic resin mass, the composition of the multi-component synthetic resin system being so selected that within less than 5 minutes of introduction of the synthetic resin system the curing is so far advanced that the fixing of the fastening elements is possible without the latter changing position under the influence of gravity and without the synthetic resin system used still being capable of liquid/viscous deformation, the multi-component synthetic resin mass then being no longer capable of flow and substantially being no longer plastic, and driving-in of the fastening element being carried out with cutting into and splitting of the cured multi-component synthetic resin mass.

2. Use according to claim 1, **characterised in that** as fastening elements one or more screws, threaded hooks, threaded eyelets, nails, clips, fastening staples or thumb tacks are driven in.

3. Use according to one of claims 1 or 2, wherein the multi-component synthetic resin system used is one which comprises two or three components that react with one another with curing and, preferably, foaming.

4. Use according to one of claims 1 to 3, wherein as multi-component synthetic resin system there is used at least one selected from the group consisting of epoxy resin, polyester, polyurethane, acrylic polyurethane, polyurea, polyurethane/polyurea mixed product, (meth)acrylate resin, other free-radical-curing resin, polyesteramide, and systems based on alkoxysilane-terminated prepolymers.

5. Use according to one of claims 1 to 4, wherein as multi-component synthetic resin system there is used a multi-component hard foam system.

6. Use according to claim 5, wherein the increase in volume on foaming is adjusted to from 1.01 to 5 times the volume of the components without foaming, preferably to from 1.05 to 3 times.

7. Use according to one of claims 1 to 6, wherein as multi-component synthetic resin system there is used a polyurethane system.

8. Use according to one of the preceding claims 1 to 7, wherein as multi-component synthetic resin system there is used such a system having two components (a) and (b), which are used in a (a) : (b) weight ratio of from 20 : 1 to 1 : 20, or such a system having three components (a), (b) and (c), which are used in a weight ratio of from (1 to 20) : (20 to 1) : (0.01 to 1).

9. Use according to one of claims 1 to 8, wherein as multi-component synthetic resin system there are used 2- or 3-component kits, especially in the form of multichamber systems.

10. Use according to one of claims 1 to 9, wherein a multi-component synthetic resin system is used which, in one or more of its components, comprises one or more further additives, especially catalysts, accelerators, inhibitors, colourants, pigments, diluents, stabilisers, plasticisers, thixotropic agents, dispersants, wetting agents, emulsifiers, fillers, antioxidants, fibres, light- and/or UV-stabilisers, HALS stabilisers, adhesion-imparting agents, foam stabilisers and/or reactive diluents.

11. Use according to one of claims 1 to 10, wherein as multi-component synthetic resin system there is used a cross-linking system which reacts to form a thermoset.

12. Use according to one of claims 1 to 11, especially according to one of claims 6 or 7, wherein as the fastening element or elements there is or are used such elements having an external thread, especially a screw, a threaded hook or a threaded eyelet, and the torque for screwing-in of the fastening element in question is adjusted by selection of the composition of the multi-component synthetic resin system in the range up to a maximum of 20 Nm, preferably from 0.3 to 6 Nm, especially from 0.7 to 3 Nm.

13. Use according to one of claims 1 to 12, wherein, by appropriate selection of the composition of the multi-component synthetic resin system, in the course of less than 5 minutes, especially advantageously less than 120 seconds, nafter introduction or especially after the start of mixing of the multi-component synthetic resin system, curing is so far advanced that the fixing of the fastening element or elements is possible.

14. Use according to one of claims 1 to 13, wherein, before the driving-in of a fastening element, protruding or undesirable portions are removed prior to the curing, especially by scraping-off, and/or, subsequent to the at least adequate curing of the synthetic resin mass, especially by grinding, polishing, cutting and/or other processing.

15. Method of fixing fastening elements, which comprises use according to one of claims 1 to 14 of a multi-component synthetic resin system mentioned in one of those claims.

16. Use according to one of claims 1 to 14, wherein the multi-component synthetic resin system, in one or more of its components, comprises one or more lubricants.

17. Use as claimed in claim 16, wherein the multi-component synthetic resin system is a polyurethane system.

18. Use as claimed in claim 16 or claim 17, wherein the multi-component synthetic resin system is a multi-component hard foam system.

19. Use as claimed in one of claims 16 to 18, wherein in the multi-component synthetic resin system there is provided as lubricant at least one solid lubricant and/or at least one liquid or semi-liquid lubricant, especially selected from molybdenum disulphide, polytetrafluoroethylene, micronised waxes, graphite, silicones, mineral oils and paraffins.

## Revendications

1. Utilisation d'un système de résine synthétique à plusieurs composants, fluide à pâteux, qui durcit dans le cadre de son utilisation, pour fixer un ou plusieurs éléments de fixation dans un substrat, dans laquelle un système de résine synthétique à plusieurs composants, fluide à pâteux sans chauffage supplémentaire, est mis en oeuvre dans au moins un trou après ou pendant le mélange de ses composants, et on attend jusqu'à ce qu'il y soit au moins suffisamment durci, puis on enfonce au moins un élément de fixation dans la masse de résine synthétique au moins suffisamment durcie obtenue, dans laquelle la composition du système de résine synthétique à plusieurs composants est sélectionnée de façon à ce que le durcissement soit avancé en l'espace de moins de 5 minutes après la mise en oeuvre du système de résine synthétique de façon à ce que la fixation des éléments de fixation soit possible sans qu'ils modifient leur position sous l'effet de la gravité et sans que le système de résine synthétique utilisé soit encore déformable en étant fluide-visqueux, dans laquelle ensuite la masse de résine synthétique à plusieurs composants n'est plus apte à l'écoulement et n'est essentiellement plus plastique et l'enfoncement de l'élément de fixation se fait par incision et fendage de la masse de résine synthétique à plusieurs composants durcie.

2. Utilisation selon la revendication 1, **caractérisée en ce que** l'on enfonce en tant qu'éléments de fixation une ou plusieurs vis, crochets à vis, oeillets à vis, clous, crampons, brides de fixation ou punaises.

3. Utilisation selon l'une des revendications 1 ou 2, dans laquelle on utilise comme système de résine synthétique à plusieurs composants un tel système qui contient deux ou trois composants qui réagissent ensemble par durcissement et de préférence par moussage.

4. Utilisation selon l'une des revendications 1 à 3, dans laquelle on utilise comme système de résine synthétique à plusieurs composants un système du groupe sélectionné parmi une résine époxy, un polyester, un polyuréthane, un acrylpolyuréthane, une polyurée, un produit mixte de polyuréthane/polyurée, une résine (méth)acrylate, une résine spéciale durcissable par voie radicalaire, un polyesteramide, et des systèmes à base de pré-polymères terminés par un alcoxysilane.

5. Utilisation selon l'une des revendications 1 à 4, dans laquelle on utilise comme système de résine synthétique à plusieurs composants un système de mousse rigide à plusieurs composants.

6. Utilisation selon la revendication 5, dans laquelle l'augmentation de volume lors du moussage est réglée à 1,01 à 5 fois le volume des composants sans moussage, de préférence à 1,05 à 3 fois.

7. Utilisation selon l'une des revendications 1 à 6, dans laquelle on utilise comme système de résine synthétique à plusieurs composants un système polyuréthane.

8. Utilisation selon l'une des revendications 1 à 7 précédentes, dans laquelle on utilise comme système de résine synthétique à plusieurs composants un tel système à deux composants (a) et (b) qui sont utilisés selon un rapport pondéral (a):(b) de 20:1 à 1:20, ou un système à trois composants (a), (b) et (c), qui utilise un rapport pondéral de (1 à 20):(20 à 1):(0,01 à 1).

9. Utilisation selon l'une des revendications 1 à 8, dans laquelle on utilise comme système de résine synthétique à plusieurs composants des kits à 2 ou 3 composants, en particulier sous la forme de systèmes à chambres multiples,

10. Utilisation selon l'une des revendications 1 à 9, dans laquelle on utilise un système de résine synthétique à plusieurs composants qui contient dans un ou plusieurs de ses composants un ou plusieurs autres additifs, en particulier des catalyseurs, des accélérateurs, des inhibiteurs, des colorants, des pigments, des diluants, des stabilisants, des plastifiants, des agents thixotropes, des agents dispersants, des agents mouillants, des émulsifiants, des matières de charge, des antioxydants, des fibres, des agents stabilisant la lumière et/ou les UV, des stabilisants HALS, des agents d'accrochage, des stabilisateurs de mousse et/ou des diluants réactifs.

11. Utilisation selon l'une des revendications 1 à 10, dans laquelle on utilise comme système de résine synthétique à plusieurs composants un système réticulant qui réagit en une résine thermodurcissable.

12. Utilisation selon l'une des revendications 1 à 11, en particulier selon l'une des revendications 6 ou 7, dans laquelle ou utilise comme élément ou éléments de fixation des éléments présentant un filetage externe, en particulier une vis, un crochet à vis ou un oeillet à vis, et dans laquelle le moment de pose pour l'élément de fixation respectif est réglé par le choix de la composition du système de résine synthétique à plusieurs composants dans la gamme allant jusqu'à 20 Nm au plus, de préférence de 0,3 à 6, en particulier de préférence de 0,7 à 3 Nm.

13. Utilisation selon l'une des revendications 1 à 12, dans laquelle, par la sélection correspondante de la composition du système de résine synthétique à plusieurs composants, le durcissement est avancé en l'espace de moins de 5 minutes, de façon particulièrement avantageuse de moins de 120 secondes après la mise en oeuvre ou en particulier après le début du mélange du système de résine synthétique à plusieurs composants, de façon à ce que la fixation du ou des éléments de fixation soit possible.

14. Utilisation selon l'une des revendications 1 à 13, dans laquelle avant l'enfoncement d'un élément de fixation, les pièces saillantes ou non souhaitées sont retirées avant le durcissement, en particulier par enlèvement ou essuyage, et/ou après le durcissement au moins suffisant de la masse de résine synthétique, en particulier par meulage, polissage, découpe et/ou tout autre type d'usinage.

15. Procédé de fixation d'éléments de fixation qui comporte une utilisation selon l'une des revendications 1 à 14 d'un système de résine synthétique à plusieurs composants cité dans ces revendications.

16. Utilisation selon l'une des revendications 1 à 14, dans laquelle le système de résine synthétique à plusieurs composants contient dans un ou plusieurs de ses composants un ou plusieurs lubrifiants.

17. Utilisation d'un système de résine synthétique à plusieurs composants selon là revendication 16, dans laquelle il s'agit d'un système à base de polyuréthane.

18. Utilisation d'un système de résine synthétique à plusieurs composants selon la revendication 16 ou selon la revendication 17, dans laquelle il s'agit d'un système de mousse rigide à plusieurs composants.

19. Utilisation d'un système de résine synthétique à plusieurs composants selon l'une des revendications 16 à 18, dans laquelle est prévu en tant que lubrifiant au moins un lubrifiant solide et/ou au moins un lubrifiant fluide ou semi-fluide, en particulier sélectionné parmi le disulfure de molybdène, le polytétrafluoroéthylène, les cires micronisées, le graphite, des silicones, les huiles minérales et les paraffines.
